# EUROPÄISCHE PATENTSCHRIFT

(11) **EP 4 482 674 B1**
(45) Veröffentlichungstag und Bekanntmachung des Hinweises auf die Patenterteilung: **31.12.2025**
(21) Anmeldenummer: 23702325.4
(22) Anmeldetag: 26.01.2023
(51) Int. Cl.: B29D 11/00

(54) **VERFAHREN ZUM EINSEITIGEN VERSEHEN EINES SUBSTRATS MIT EINER EINFÄRBUNG UND EINER FUNKTIONSFÄRBUNG**
METHOD FOR PROVIDING A SUBSTRATE WITH A COLOURING AND A FUNCTIONAL COLOURING ON ONE SIDE
PROCÉDÉ DE FOURNITURE D'UN SUBSTRAT AVEC UNE COLORATION ET UNE COLORATION FONCTIONNELLE SUR UN CÔTÉ

(30) Priorität: 25.02.2022 DE 102022104556
(43) Veröffentlichungstag der Anmeldung: 01.01.2025
(73) Patentinhaber: Rodenstock GmbH, 80687 München (DE)
(72) Erfinder: ZINNER, Herbert, 85296 Rohrbach (DE); HILBLE, Simone, 82166 Gräfelfing (DE); FISCHER, Kurt, 94258 Frauenau (DE); WIND, Beate, 94209 Regen (DE); SOMMER, Hans-Peter, 80999 München (DE)
(74) Vertreter: Müller-Boré & Partner Patentanwälte PartG mbB
(86) Internationale Anmeldenummer: PCT/EP2023/051929
(87) Internationale Veröffentlichungsnummer: WO 2023/160939

(56) Entgegenhaltungen:
- US-A1- 2009 285 982
- US-A1- 2013 142 948
- US-A1- 2015 219 931

## Beschreibung

Die vorliegende Erfindung betrifft ein Verfahren zum einseitigen Versehen eines Substrats mit einer Einfärbung und einer Funktionsfärbung.

Selbsttönende Brillengläser, auch photochrome Brillengläser genannt, können auf UV-Licht reagieren. Je nach Intensität des auf das Brillenglas auftreffenden UV-Lichts tönt sich dieses dunkel oder hell. Das Eindunkeln bzw. Aufhellen des Brillenglases wird durch eine Funktionsfärbung ermöglicht, mit welcher das Brillenglas versehen ist. Die Funktionsfärbung wird hierbei durch einen photochromen Farbstoff hervorgerufen, welcher mit einer reversiblen Änderung seiner molekularen Struktur und damit auch seines Absorptionsverhaltens auf die Bestrahlung mit UV-Licht reagiert. Lässt die Bestrahlung mit UV-Licht nach, nimmt der photochrome Farbstoff wieder seine ursprüngliche molekulare Struktur und damit auch sein ursprüngliches Absorptionsverhalten an. Ein photochromer Farbstoff ermöglicht somit ein reversibles Hin- und Herschalten zwischen einer dunklen und einer hellen Tönung.

In der Regel wird die Funktionsfärbung nur auf eine der beiden konkaven und konvexen Hauptseiten des Brillenglases aufgebracht. So ist eine Funktionsfärbung auf beiden Hauptseiten in der Regel problematisch, da hierdurch der mit der Funktionsfärbung einhergehende Effekt, etwa das Eindunkeln bzw. Aufhellen des Brillenglases, schwer kontrollierbar wird. Die Ursache hierfür liegt darin begründet, dass die Intensität des auf die beiden konkaven und konvexen Hauptseiten auftreffenden UV-Lichts unterschiedlich ist. In erster Linie ist für den Schutz des Auges das auf die konvexe Hauptseite auftreffende UV-Licht maßgeblich, da dieses unmittelbar auf den Brillenträger gerichtet ist. Daher wird die Funktionsfärbung normalerweise auf die als Vorderseite dienende konvexe Hauptseite des Brillenglases aufgebracht.

Die vorstehend genannten Ausführungen gelten in gleicher Weise auch für das Versehen des Brillenglases mit einer Einfärbung, welche dazu dient, dem Brillenglas neben der Funktionsfärbung einen bestimmten Farbton zu verleihen, was insbesondere bei Sonnenbrillen gewünscht ist. Im Gegensatz zur Funktionsfärbung kommen bei der Einfärbung Farbstoffe zum Einsatz, welche - abgesehen von ihren Absorptionseigenschaften - über keinerlei funktionale Eigenschaften verfügen und sinngemäß als nicht-funktionale Farbstoffe bezeichnet werden. Wie die Funktionsfärbung wird auch die Einfärbung typischerweise nur einseitig auf das Brillenglas aufgebracht, wobei sich die Einfärbung und die Funktionsfärbung dann auf derselben Hauptseite des Brillenglases befinden. In der Regel erfolgt zunächst das einseitige Aufbringen der Einfärbung auf die konvexe Hauptseite des Brillenglases. Im Anschluss daran wird hierauf die Funktionsfärbung aufgebracht.

Im Stand der Technik sind verschiedene Verfahren bekannt, um Brillengläser einseitig mit einer Einfärbung und einer Funktionsfärbung zu versehen.

In diesem Zusammenhang kann beispielsweise das in EP 1 122 355 A1 beschriebene Verfahren zum Einfärben einer Kunststofflinse genannt werden. Dieses umfasst einen Schritt des Einrichtens der Linse in einer vorbestimmten Position in einer Dampfabscheidungsvorrichtung, einen Schritt des Einrichtens eines Grundkörpers zur Verwendung für einen Färbebetrieb in der Dampfabscheidungsvorrichtung, wobei ein Färbemedium, welches einen gelösten oder feinkörnig dispergierten, sublimierbaren nicht-funktionalen Farbstoff enthält, zum Bilden einer Farbstoffapplikationsfläche auf dem Grundkörper aufgebracht ist und der Grundkörper derart angeordnet ist, dass die Farbstoffapplikationsfläche auf die konvexe Hauptseite der Linse zeigt, ohne mit ihr in Kontakt zu stehen, und einen Schritt des Erwärmens des Grundkörpers durch eine Erwärmungsquelle unter Vakuumbedingungen in der Dampfabscheidungsvorrichtung, wodurch der nicht-funktionale Farbstoff der Farbstoffapplikationsfläche sublimiert wird und eine Dampfabscheidung des sublimierten nicht-funktionalen Farbstoffs auf die konvexe Hauptseite der Linse stattfindet.

Im Anschluss daran wird die Funktionsfärbung, welche in Form eines Photolacks vorliegt, auf die konvexe Hauptseite der Linse, welche zuvor mit der Einfärbung versehen worden ist, aufgebracht. Der Photolack bildet auf dem Substrat eine polymere Schicht aus. Die polymere Schicht mit der Funktionsfärbung wird von der sich darunter befindlichen Einfärbung nicht beeinflusst.

Das vorstehend beschriebene Vorgehen ist zwar geeignet, ein Brillenglas einseitig mit einer Einfärbung und einer Funktionsfärbung zu versehen. Allerdings ist das aus EP 1 122 355 A1 bekannte Verfahren apparativ sehr aufwändig, weswegen damit erhaltene Brillengläser entsprechend kostspielig sind. Wie vorstehend erwähnt, bedarf das besagte Verfahren einer speziellen Dampfabscheidungsvorrichtung mit einem eigens dafür vorgesehenen Grundkörper, auf dem eine Farbstoffapplikationsfläche gebildet ist. Eine solche Vorrichtung lässt sich jedoch nicht für andere Prozessschritte im Rahmen der Brillenglasfertigung verwenden. Da der nicht-funktionale Farbstoff der Farbstoffapplikationsfläche ferner sublimierbar sein muss, kann in dem besagten Verfahren auch nicht jeder beliebige nicht-funktionale Farbstoff eingesetzt werden. All diese Nachteile stehen einer serienmäßigen Brillenglasfertigung entgegen.

Zudem sind aus US 2013/142948 A1 Maßnahmen zur Herstellung einer photochromen Linse, darunter ein System, eine Vorrichtung, ein Programm, ein Aufzeichnungsmedium mit darauf aufgezeichnetem Programm sowie ein Verfahren, bekannt. Ein Beschichtungsverfahren mittels Aufschleudern geht aus US 2009/285982 A1 hervor. Schließlich beschreibt US 2015/219931 A1 eine Linse aus farbigem Glas für Brillen sowie ein Verfahren zur Herstellung derselben.

Der vorliegenden Erfindung liegt somit die Aufgabe zugrunde, ein Verfahren bereitzustellen, welches in der Lage ist, ein Substrat einseitig mit einer Einfärbung und einer Funktionsfärbung zu versehen, wobei das bereitzustellende Verfahren dies auf apparativ einfache und damit kostengünstige Weise ermöglichen soll.

Die vorstehend gestellte Aufgabe wird durch ein Verfahren zum einseitigen Versehen eines Substrats mit einer Einfärbung und einer Funktionsfärbung mit den Merkmalen des Anspruchs 1 gelöst. Bevorzugte Ausführungsformen sind in den Unteransprüchen offenbart.

Das erfindungsgemäße Verfahren zum einseitigen Versehen eines Substrats mit einer Einfärbung und einer Funktionsfärbung, im Folgenden auch lediglich als erfindungsgemäßes Verfahren bezeichnet, umfasst die folgenden Schritte (a) bis (d):
(a) Bereitstellen eines einseitig mit einer Einfärbung und einer Funktionsfärbung zu versehenden Substrats, wobei es sich bei dem Substrat um ein aus Kunststoffglas gefertigtes Halbteil mit einer ersten Hauptseite und einer der ersten Hauptseite gegenüberliegenden zweiten Hauptseite, welche eine konvexe Form aufweist, handelt,
(b) Aufbringen einer Einfärbung auf beide Hauptseiten des in Schritt (a) bereitgestellten Substrats,
(c) Aufbringen einer Funktionsfärbung auf die zweite Hauptseite des in Schritt (b) auf beiden Hauptseiten mit einer Einfärbung versehenen Substrats, wobei die Funktionsfärbung durch mindestens einen photochromen Farbstoff hervorgerufen wird und der mindestens eine photochrome Farbstoff in einem Photolack, welcher auf dem Substrat eine polymere Schicht ausbildet, enthalten ist, und
(d) Nachbearbeiten des in Schritt (c) auf der zweiten Hauptseite mit einer Funktionsfärbung versehenen Substrats dergestalt, dass die Einfärbung auf der ersten Hauptseite abgetragen wird, wodurch ein lediglich auf der zweiten Hauptseite mit einer Einfärbung und einer Funktionsfärbung versehenes Substrat erhalten wird.

Das erfindungsgemäße Verfahren ermöglicht das einseitige Versehen eines Substrats mit einer Einfärbung und einer Funktionsfärbung auf apparativ einfache und damit kostengünstige Weise. Da zunächst beide Hauptseiten des Substrats mit einer Einfärbung versehen werden, bedarf es keiner speziell angepassten Vorrichtung, wie etwa einer Dampfabscheidungsvorrichtung, welche es erlaubt, nur eine der beiden Hauptseiten des Substrats mit einer Einfärbung zu versehen. So kann im erfindungsgemäßen Verfahren das Substrat in einer herkömmlichen Färbeanlage eingefärbt werden. Hierdurch sind zugleich die Anforderungen an den für die Einfärbung eingesetzten nicht-funktionalen Farbstoff geringer, da er nicht sublimierbar sein muss. All dies begünstigt eine serienmäßige Brillenglasfertigung auf Basis des erfindungsgemäßen Verfahrens.

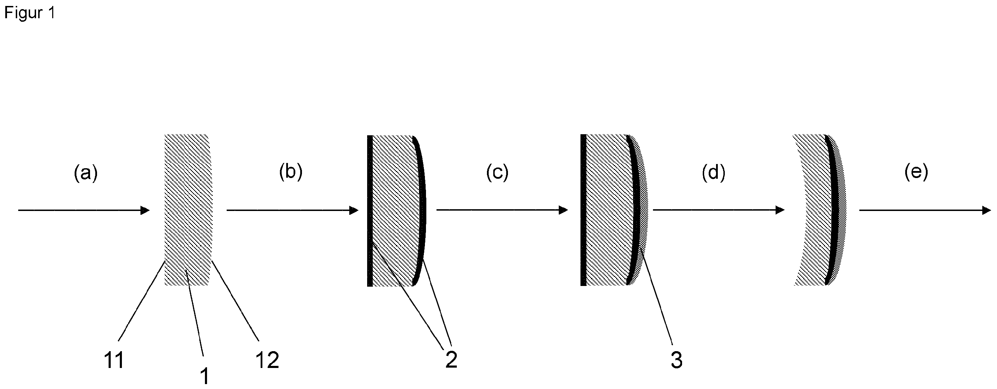

Im Folgenden wird das erfindungsgemäße Verfahren zum einseitigen Versehen eines Substrats mit einer Einfärbung und einer Funktionsfärbung, welches in Figur 1 schematisch dargestellt ist, näher beschrieben:
In Schritt (a) des erfindungsgemäßen Verfahrens wird ein einseitig mit einer Einfärbung und einer Funktionsfärbung zu versehendes Substrat bereitgestellt. Gemäß der vorliegenden Erfindung handelt es sich bei dem Substrat um ein aus Kunststoffglas gefertigtes Halbteil. Unter einem Halbteil, mitunter auch als "Blank" bezeichnet, wird vorliegend ein Halbfertigerzeugnis verstanden, welches sich von einem Fertigerzeugnis dahingehend unterscheidet, dass es für einen vorbestimmten Zweck, etwa als Linse für ein Brillenglas, noch nicht unmittelbar einsetzbar ist.

Das Substrat weist eine erste Hauptseite und eine der ersten Hauptseite gegenüberliegende zweite Hauptseite auf. Die erste Hauptseite des Substrats entspricht der Rückseite des späteren Brillenglases, welche dem Brillenträger zugewandt ist, während die zweite Hauptseite des Substrats der Vorderseite des späteren Brillenglases entspricht, welche vom Brillenträger weg zeigt. Gemäß der vorliegenden Erfindung weist die zweite Hauptseite des Substrats eine konvexe Form auf. Was die Form der ersten Hauptseite des Substrats anbelangt, ist das erfindungsgemäße Verfahren nicht weiter eingeschränkt. So kann die erste Hauptseite des Substrats beispielsweise eine konkave oder planare Form aufweisen. Im Gegensatz zu einem Rohling, welcher noch planparallele Hauptseiten aufweist, lässt das als Substrat dienende Halbteil aufgrund der Form der zweiten Hauptseite bereits ein Brillenglas erkennen. So entspricht die zweite Hauptseite des Substrats bereits der endgültigen optisch wirksamen Fläche. Verglichen mit einem Rohling ist das Halbteil also bereits in eine grundlegende geometrische Form gebracht, welche grob derjenigen des Fertigerzeugnisses entspricht.

Das als Substrat dienende Halbteil ist aus Kunststoffglas gefertigt. Kunststoffglas hat gegenüber Mineralglas den Vorteil, dass es eine geringere Dichte aufweist und damit bei gleicher Substratgröße leichter ist. Weiterhin weist Kunststoffglas gegenüber Mineralglas eine erhöhte Bruchsicherheit auf. Entsprechende Kunststoffmaterialien zur Fertigung von Kunststoffgläsern sind dem Fachmann bekannt. So kann das als Substrat dienende Halbteil beispielsweise aus Polythiourethan, Polymethylmethacrylat, Polycarbonat, Polyacrylat, Polydiethylenglycolbisallylcarbonat oder Kombinationen hiervon gefertigt sein, wobei prinzipiell auch andere transparente Kunststoffmaterialien verwendet werden können.

In Schritt (b) des erfindungsgemäßen Verfahrens wird eine Einfärbung auf beide Hauptseiten des in Schritt (a) bereitgestellten Substrats aufgebracht. Die Einfärbung dient einzig dazu, dem Substrat einen bestimmten Farbton zu verleihen. Wie eingangs erwähnt, kommen hierbei Farbstoffe zum Einsatz, welche - abgesehen von ihren Absorptionseigenschaften - über keinerlei funktionale Eigenschaften verfügen, dementsprechend auch kein reversibles Hin- und Herschalten zwischen einer dunklen und einer hellen Tönung ermöglichen. Entsprechend sind nicht-funktionale Farbstoffe, wie sie im erfindungsgemäßen Verfahren eingesetzt werden, nicht-photochrom. Im Stand der Technik sind verschiedene Klassen nicht-funktionaler Farbstoffe beschrieben. Häufig handelt es sich hierbei um Azo-Farbstoffe, Cyanin-Farbstoffe, Anthrachinon-Farbstoffe oder dergleichen, wie sie beim herkömmlichen Einfärben von Brillengläsern vielfach eingesetzt werden. Routinemäßig wählt der Fachmann einen geeigneten nicht-funktionalen Farbstoff oder ein Gemisch geeigneter nicht-funktionaler Farbstoffe aus.

Was das Aufbringen der Einfärbung in Schritt (b) anbelangt, ist das erfindungsgemäße Verfahren nicht weiter eingeschränkt. In einer bevorzugten Ausführungsform erfolgt das Aufbringen der Einfärbung in Schritt (b) durch Eintauchen des Substrats in ein Färbebecken, welches mindestens einen in einem flüssigen Medium gelösten oder dispergierten nicht-funktionalen Farbstoff enthält. Infolge des Eintauchens in das Färbebecken wird das Substrat vollumfänglich mit einer Einfärbung versehen. Neben der zweiten Hauptseite wird also auch die erste Hauptseite des Substrats mit der Einfärbung versehen. Das Färbebecken unterliegt keiner besonderen Beschränkung, solange es das Substrat mit einer Einfärbung versehen kann.

Das Färbebecken, welches Bestandteil einer herkömmlichen und für eine Vielzahl von Anwendungen einsetzbaren Färbeanlage sein kann, ist mit einem flüssigen Medium gefüllt. In diesem liegt der mindestens eine nicht-funktionale Farbstoff gelöst oder dispergiert vor. Ohne darauf beschränkt zu sein, kann es sich bei dem flüssigen Medium um ein Wasserbad handeln. Um das Aufbringen der Einfärbung auf dem Substrat zu begünstigen, wird das flüssige Medium typischerweise auf eine Temperatur im Bereich von 60 bis 100°C, beispielsweise auf eine Temperatur im Bereich von 75 bis 95°C, erwärmt, wobei die einstellbare Erwärmungstemperatur des flüssigen Mediums nicht zuletzt von dessen Siedepunkt abhängt. Bei erhöhter Temperatur wird die Aufnahme des nicht-funktionalen Farbstoffs durch die Oberfläche des Substrats gefördert. Weitergehende Einzelheiten in Bezug auf den Färbeprozess in einem Färbebecken sind dem Fachmann bekannt.

Anhand der zeitlichen Dauer des Eintauchens lässt sich schließlich das Ausmaß der Farbstoffaufnahme gezielt steuern. Dabei gilt, dass das Ausmaß der Farbstoffaufnahme mit der zeitlichen Dauer des Eintauchens zunimmt. Mit zunehmendem Ausmaß der Farbstoffaufnahme nimmt wiederum die Transmission des in Schritt (b) auf beiden Hauptseiten mit einer Einfärbung versehenen Substrats ab. Bei der Wahl der zeitlichen Dauer des Eintauchens ist zu beachten, dass die gewünschte Transmission, auch als Zieltransmission bezeichnet, erst nach dem Nachbearbeiten in Schritt (d) erreicht wird. So nimmt durch die Abtragung der Einfärbung auf der ersten Hauptseite, gegebenenfalls zusammen mit einem Teil des darunter liegenden Substratmaterials, wie weiter unten im Zusammenhang mit Schritt (d) näher beschrieben, die Transmission zu. Die Transmission vor der Abtragung ist demnach geringer als die Transmission nach der Abtragung, d.h. geringer als die Zieltransmission.

In Schritt (c) des erfindungsgemäßen Verfahrens wird eine Funktionsfärbung auf die zweite Hauptseite des in Schritt (b) auf beiden Hauptseiten mit einer Einfärbung versehenen Substrats aufgebracht. Die Funktionsfärbung dient dazu, dem Substrat eine bestimmte funktionale Eigenschaft zu verleihen. Gemäß der vorliegenden Erfindung liegt die funktionale Eigenschaft in einer reversiblen Änderung des Absorptionsverhaltens begründet, bedingt durch einen äußeren Stimulus wie etwa UV-Licht. Dementsprechend wird die Funktionsfärbung durch mindestens einen photochromen Farbstoff hervorgerufen. Im Stand der Technik sind verschiedene Klassen photochromer Farbstoffe beschrieben. Häufig handelt es sich hierbei um Chromene, Viologene, Fulgide und Fulgimide sowie insbesondere auch um Spiroverbindungen wie Spirooxazine oder Spiropyrane, ohne jedoch hierauf beschränkt zu sein. Routinemäßig wählt der Fachmann einen geeigneten photochromen Farbstoff oder ein Gemisch geeigneter photochromer Farbstoffe aus.

Was das Aufbringen der Funktionsfärbung in Schritt (c) anbelangt, ist das erfindungsgemäße Verfahren nicht weiter eingeschränkt, solange der mindestens eine photochrome Farbstoff in einem Photolack enthalten ist. In einer bevorzugten Ausführungsform erfolgt das Aufbringen der Funktionsfärbung in Schritt (c) durch Schleuderbeschichtung unter Verwendung eines derartigen Photolacks. Wie eingangs erwähnt, bildet der Photolack auf dem Substrat eine polymere Schicht aus. Der Photolack wird also nicht entfernt, sondern verbleibt zusammen mit dem darin enthaltenen mindestens einen photochromen Farbstoff auf dem Substrat. Wird in Schritt (c) die Funktionsfärbung durch Schleuderbeschichtung aufgebracht, erfolgt dies zweckmäßigerweise nur auf der zweiten Hauptseite des Substrats. Eine auf der ersten Hauptseite des Substrats aufgebrachte Funktionsfärbung würde, zusammen mit der sich darunter befindlichen Einfärbung, ohnehin in Schritt (d) abgetragen werden. Anstatt durch Schleuderbeschichtung kann in Schritt (c) das Aufbringen der Funktionsfärbung auch mittels Tauchverfahren erfolgen. Naturgemäß wird hierbei das Substrat vollumfänglich mit einer Funktionsfärbung versehen. Neben der zweiten Hauptseite wird also auch die erste Hauptseite des Substrats mit der Funktionsfärbung versehen.

In Schritt (d) des erfindungsgemäßen Verfahrens wird das in Schritt (c) auf der zweiten Hauptseite mit einer Funktionsfärbung versehene Substrat nachbearbeitet. Das Nachbearbeiten in Schritt (d) erfolgt dergestalt, dass die Einfärbung auf der ersten Hauptseite abgetragen wird. Befindet sich über der Einfärbung auf der ersten Hauptseite eine Funktionsfärbung, welche beispielsweise von der Anwendung des Tauchverfahrens in Schritt (c) herrührt, wird diese zeitgleich abgetragen. Durch das Nachbearbeiten in Schritt (d) wird schließlich ein Substrat erhalten, welches lediglich auf der zweiten Hauptseite und damit einseitig mit einer Einfärbung und einer Funktionsfärbung versehen ist.

Was das Nachbearbeiten in Schritt (d) anbelangt, ist das erfindungsgemäße Verfahren nicht weiter eingeschränkt. In einer bevorzugten Ausführungsform erfolgt das Nachbearbeiten in Schritt (d) durch mindestens eine Form der Flächenbearbeitung, ausgewählt aus der Gruppe, bestsehend aus Fräsen, Schleifen und Polieren. Grundsätzlich ist jedoch jede andere Form der Flächenbearbeitung denkbar, solange diese ein rückstandsfreies Entfernen der Einfärbung gewährleistet.

Gegebenenfalls wird in Schritt (d) neben der Einfärbung auf der ersten Hauptseite auch ein Teil des darunter liegenden Substratmaterials abgetragen. Hierdurch ist es möglich, die geometrische Form des Substrats an die späteren Erfordernisse, etwa in Bezug auf die gewünschte optische Wirkung, beispielsweise in Bezug auf die gewünschte Brechkraft, wie sie sich aus einer augenoptischen Verordnung ergibt, einzustellen. Zu beachten ist hierbei, dass die Abtragung des Substratmaterials ebenfalls einen Einfluss auf die Transmission hat. Dies gilt es beim Aufbringen der Einfärbung in Schritt (b) zu berücksichtigen. Wenn zur Erzielung der gewünschten optischen Wirkung vergleichsweise viel Substratmaterial in Schritt (d) abgetragen werden muss, ist in Schritt (b) eine größere zeitliche Dauer des Eintauchens in das Färbebecken vorzusehen, um die Zieltransmission zu erreichen.

Neben den Schritten (a) bis (d) kann das erfindungsgemäße Verfahren weiterhin einen Schritt des Aufbringens einer oder mehrerer Vergütungsschichten auf mindestens eine der beiden Hauptseiten des lediglich auf der zweiten Hauptseite mit einer Einfärbung und einer Funktionsfärbung versehenen Substrats, im Folgenden auch als Schritt (e) bezeichnet, umfassen. Typischerweise wird in Schritt (e) neben der zweiten Hauptseite des Substrats, welche mit einer Einfärbung und einer Funktionsfärbung versehen ist, auch die erste Hauptseite des Substrats vergütet. Typische Vergütungsschichten schließen Hartschichten, welche dem Schutz vor Kratzern dienen, Interferenz-/Entspiegelungsschichten, welche der Reflexminderung dienen, sowie Pflegeleichtschichten, mitunter auch als "Topcoat" oder "Cleancoat" bezeichnet, welche der Wasser- und Schmutzabweisung dienen, ein, ohne jedoch hierauf beschränkt zu sein. Dem Fachmann sind entsprechende Maßnahmen zum Aufbringen derartiger Vergütungsschichten bekannt. Insofern beim Aufbringen der Funktionsfärbung in Schritt (c) ein Photolack verwendet wird, kann es erforderlich sein, dass vor dem Vergüten in Schritt (e) überschüssige Reste des Photolacks an den Rändern des Substrats entfernt werden müssen.

Gemäß der vorliegenden Erfindung ist das Substrat lediglich auf der zweiten Hauptseite, welche eine konvexe Form aufweist, mit einer Einfärbung und einer Funktionsfärbung versehen. Das erfindungsgemäße Verfahren lässt sich jedoch mühelos derart modifizieren, dass anstelle der zweiten Hauptseite die erste Hauptseite des Substrats, welche beispielsweise eine konkave oder planare Form aufweist, mit einer Einfärbung und einer Funktionsfärbung versehen wird. Entsprechend wird in Schritt (c) die Funktionsfärbung auf die erste Hauptseite des Substrats aufgebracht und in Schritt (d) wird die Einfärbung sodann auf der zweiten Hauptseite, gegebenenfalls zusammen mit einem Teil des darunter liegenden Substratmaterials, abgetragen.

### Das mit dem erfindungsgemäßen Verfahren erhältliche einseitig mit einer Einfärbung und einer Funktionsfärbung versehene Substrat ist vielseitig einsetzbar und lässt sich beispielsweise als Linse für ein Brillenglas verwenden. Zur Einpassung in ein Brillengestell wird das Substrat dann noch randbearbeitet.

### Beschreibung der Figur:

Figur 1 zeigt eine schematische Darstellung des erfindungsgemäßen Verfahrens. Der in Figur 1 ebenfalls dargestellte Schritt (e) ist optional.

### Liste der Bezugszeichen:

- 1: Substrat (aus Kunststoffglas gefertigtes Halbteil)
- 11: erste Hauptseite des Substrats
- 12: zweite Hauptseite des Substrats
- 2: Einfärbung
- 3: Funktionsfärbung

### Beispiel

Das folgende Ausführungsbeispiel dient der weiteren Erläuterung der vorliegenden Erfindung, ohne jedoch auf dieses beschränkt zu sein.

Im Einklang mit dem erfindungsgemäßen Verfahren wurden Substrate einseitig mit einer Einfärbung und einer Funktionsfärbung versehen. Bei der Einfärbung kamen unterschiedliche nicht-funktionale Farbstoffe wie Anthrachinon-Farbstoffe oder Azo-Farbstoffe zum Einsatz. Bei der Funktionsfärbung wurde hingegen stets der gleiche photochrome Farbstoff eingesetzt.

Als Substrate wurden zunächst aus Kunststoffglas gefertigte Halbteile mit einer ersten Hauptseite, welche eine planare Form aufwies, und einer zweiten Hauptseite, welche eine konvexe Form aufwies, bereitgestellt. Anschließend wurden die Substrate in ein Färbebecken eingetaucht. Dieses enthielt in wässriger Lösung den jeweiligen nicht-funktionalen Farbstoff für die Einfärbung. Durch das Eintauchen in das Färbebecken wurden die Substrate vollumfänglich mit der Einfärbung versehen. Die zeitliche Dauer des Eintauchens wurde so gewählt, dass nach dem Nachbearbeiten die Zieltransmission erreicht wurde. Der Färbeprozess fand bei einer Temperatur im Bereich von 60 bis 100°C statt.

Im Anschluss daran wurde die Transmission der Substrate bei einer Wellenlänge von 380 bis 780 nm gemessen, wobei die Transmission mit dem relativen spektralen Hellempfindlichkeitsgrad (V-Lambda-Kurve) gewichtet wurde. Hierbei kam ein Transmissionsmessgerät des Typs "Lens Colour Analyser TFM-1" der Firma "tec5 AG" zum Einsatz. Die so erhaltenen Messwerte sind in Tabelle 1 aufgelistet und werden darin als Transmission vor der Abtragung bezeichnet. Bedingt durch den Umstand einerseits, dass zunächst beide Hauptseiten der Substrate mit einer Einfärbung versehen waren, und bedingt durch den Umstand andererseits, dass die als Substrate dienenden Halbteile noch eine relativ große Dicke aufwiesen, war die Transmission vor der Abtragung vergleichsweise gering.

Daraufhin wurde auf die zweite Hauptseite der vollumfänglich eingefärbten Substrate die Funktionsfärbung aufgebracht. Dies geschah entweder durch Schleuderbeschichtung oder mittels Tauchverfahren unter Verwendung eines Photolacks, welcher den photochromen Farbstoff für die Funktionsfärbung enthielt.

Die Substrate wurden nach dem Aufbringen der Funktionsfärbung in einem Lager für Halbfertigerzeugnisse zwischengelagert, bevor sie schließlich nachbearbeitet wurden. Dies geschah durch eine geeignete Form der Flächenbearbeitung, wobei neben der Einfärbung auf der ersten Hauptseite auch ein Teil des darunter liegenden Substratmaterials abgetragen wurde, so dass die gewünschte optische Wirkung erzielt wurde. Unter den zuvor genannten Bedingungen wurde erneut die Transmission der Substrate gemessen, wodurch die in Tabelle 1 als Transmission nach der Abtragung bezeichneten Messwerte erhalten wurden. Diese entsprachen der Zieltransmission. Durch die Abtragung der Einfärbung auf der ersten Hauptseite zusammen mit einem Teil des darunter liegenden Substratmaterials nahm die Transmission der Substrate entsprechend zu, wie jeweils aus einem Vergleich der Transmission nach der Abtragung mit der Transmission vor der Abtragung ersichtlich wird.

**Tabelle 1**

| Farbton des Substrats nach der Einfärbung | Transmission vor der Abtragung [%] | Transmission nach der Abtragung [%] |
|---|---|---|
| braun | 11,5 | 55,0 |
| grün | 22,2 | 50,0 |
| grau | 18,0 | 50,0 |

Sodann wurde auf beide Hauptseiten der einseitig mit einer Einfärbung und einer Funktionsfärbung versehenen Substrate ein Hartlack mittels Tauchverfahren aufgebracht. Anschließend wurde hierauf noch eine Interferenz-/Entspiegelungsschicht aufgebracht. Die so erhaltenen Substrate verfügten über alle erforderlichen Eigenschaften und stellten somit rohrunde Brillengläser dar, die sich zur Einpassung in ein Brillengestell dann noch randbearbeiten ließen.

Wie dem Ausführungsbeispiel entnommen werden kann, ermöglicht das erfindungsgemäße Verfahren das einseitige Versehen eines Substrats mit einer Einfärbung und einer Funktionsfärbung auf apparativ einfache und damit kostengünstige Weise.

## Patentansprüche

1. Verfahren zum einseitigen Versehen eines Substrats (1) mit einer Einfärbung (2) und einer Funktionsfärbung (3), umfassend die folgenden Schritte (a) bis (d):
(a) Bereitstellen eines einseitig mit einer Einfärbung (2) und einer Funktionsfärbung (3) zu versehenden Substrats (1), wobei es sich bei dem Substrat (1) um ein aus Kunststoffglas gefertigtes Halbteil mit einer ersten Hauptseite (11) und einer der ersten Hauptseite (11) gegenüberliegenden zweiten Hauptseite (12), welche eine konvexe Form aufweist, handelt,
(b) Aufbringen einer Einfärbung (2) auf beide Hauptseiten (11, 12) des in Schritt (a) bereitgestellten Substrats (1),
(c) Aufbringen einer Funktionsfärbung (3) auf die zweite Hauptseite (12) des in Schritt (b) auf beiden Hauptseiten (11, 12) mit einer Einfärbung (2) versehenen Substrats (1), wobei die Funktionsfärbung (3) durch mindestens einen photochromen Farbstoff hervorgerufen wird und der mindestens eine photochrome Farbstoff in einem Photolack, welcher auf dem Substrat (1) eine polymere Schicht ausbildet, enthalten ist, und
(d) Nachbearbeiten des in Schritt (c) auf der zweiten Hauptseite (12) mit einer Funktionsfärbung (3) versehenen Substrats (1) dergestalt, dass die Einfärbung (2) auf der ersten Hauptseite (11) abgetragen wird, wodurch ein lediglich auf der zweiten Hauptseite (12) mit einer Einfärbung (2) und einer Funktionsfärbung (3) versehenes Substrat (1) erhalten wird.

2. Verfahren nach Anspruch 1, wobei die erste Hauptseite (11) des Substrats (1) eine konkave oder planare Form aufweist.

3. Verfahren nach Anspruch 1 oder 2, wobei das als Substrat (1) dienende Halbteil aus Polythiourethan, Polymethylmethacrylat, Polycarbonat, Polyacrylat, Polydiethylenglycolbisallylcarbonat oder Kombinationen hiervon gefertigt ist.

4. Verfahren nach einem der Ansprüche 1 bis 3, wobei das Aufbringen der Einfärbung (2) in Schritt (b) durch Eintauchen des Substrats (1) in ein Färbebecken, welches mindestens einen in einem flüssigen Medium gelösten oder dispergierten nicht-funktionalen Farbstoff enthält, erfolgt.

5. Verfahren nach einem der Ansprüche 1 bis 4, wobei das Aufbringen der Funktionsfärbung (3) in Schritt (c) durch Schleuderbeschichtung oder mittels Tauchverfahren erfolgt.

6. Verfahren nach einem der Ansprüche 1 bis 5, wobei das Nachbearbeiten in Schritt (d) durch mindestens eine Form der Flächenbearbeitung, ausgewählt aus der Gruppe, bestehend aus Fräsen, Schleifen und Polieren, erfolgt.

7. Verfahren nach einem der Ansprüche 1 bis 6, wobei in Schritt (d) neben der Einfärbung (2) auf der ersten Hauptseite (11) auch ein Teil des darunter liegenden Substratmaterials abgetragen wird.

8. Verfahren nach einer Ansprüche 1 bis 7, weiter umfassend den folgenden Schritt (e):
Aufbringen einer oder mehrerer Vergütungsschichten auf mindestens eine der beiden Hauptseiten (11, 12) des lediglich auf der zweiten Hauptseite (12) mit einer Einfärbung (2) und einer Funktionsfärbung (3) versehenen Substrats (1).

## Claims

1. Method for unilaterally providing a substrate (1) with a coloration (2) and a functional coloration (3), comprising the following steps (a) to (d):
(a) Providing a substrate (1) to be provided on one side with a coloration (2) and a functional coloration (3), wherein the substrate (1) is a half-part made of plastic glass with a first main side (11) and a second main side (12) opposite the first main side (11), which has a convex shape,
(b) applying a coloration (2) to both main sides (11, 12) of the substrate (1) provided in step (a),
(c) applying a functional coloring (3) to the second main side (12) of the substrate (1) provided with a coloring (2) on both main sides (11, 12) in step (b), wherein the functional coloring (3) is produced by at least one photochromic dye and the at least one photochromic dye is contained in a photoresist which forms a polymer layer on the substrate (1), and
(d) Post-processing the substrate (1) provided with a functional coloring (3) on the second main side (12) in step (c) in such a way that the coloring (2) on the first main side (11) is removed, thereby obtaining a substrate (1) provided with a coloring (2) on the first main side (11) and a functional coloring (3) on the second main side (12) only (2) and a functional coloring (3) on the second main side (12).

2. Method according to claim 1, wherein the first main side (11) of the substrate (1) has a concave or planar shape.

3. Method according to claim 1 or 2, wherein the half-part serving as substrate (1) is made of polythiourethane, polymethyl methacrylate, polycarbonate, polyacrylate, polyethylene glycol bisallyl carbonate, or combinations thereof.

4. Method according to one of claims 1 to 3, wherein the application of the coloring (2) in step (b) is carried out by immersing the substrate (1) in a dyeing bath containing at least one non-functional dye dissolved or dispersed in a liquid medium.

5. Method according to one of claims 1 to 4, wherein the application of the functional dye (3) in step (c) is carried out by spin coating or by means of a dip coating process.

6. Method according to one of claims 1 to 5, wherein the post-processing in step (d) is carried out by at least one form of surface treatment selected from the group consisting of milling, grinding, and polishing.

7. Method according to one of claims 1 to 6, wherein in step (d), in addition to the coloring (2) on the first main side (11), part of the underlying substrate material is also removed.

8. Method according to claims 1 to 7, further comprising the following step (e):
Applying one or more tempering layers to at least one of the two main sides (11, 12) of the substrate (1), which is provided with a coloration (2) and a functional coloration (3) only on the second main side (12).

## Revendications

1. Procédé pour munir une face d'un substrat (1) d'une coloration (2) et d'une coloration fonctionnelle (3), comprenant les étapes (a) à (d) suivantes:
(a) Préparation d'un substrat (1) à munir d'un côté d'une coloration (2) et d'une coloration fonctionnelle (3), le substrat (1) étant une demi-pièce fabriquée en verre synthétique avec une première face principale (11) et une deuxième face principale (12) opposée à la première face principale (11), qui présente une forme convexe,
(b) Application d'une coloration (2) sur les deux faces principales (11, 12) du substrat (1) préparé à l'étape (a),
(c) application d'une coloration fonctionnelle (3) sur la deuxième face principale (12) du substrat (1) pourvu d'une coloration (2) sur les deux faces principales (11, 12) à l'étape (b), la coloration fonctionnelle (3) étant provoquée par au moins un colorant photochromique et le au moins un colorant photochromique étant contenu dans un photorésist qui forme une couche polymère sur le substrat (1), et
(d) le post-traitement du substrat (1) pourvu d'une coloration fonctionnelle (3) sur la deuxième face principale (12) à l'étape (c), de telle sorte que la coloration (2) sur la première face principale (11) est enlevée, ce qui permet d'obtenir un substrat (1) pourvu d'une coloration (2) et d'une coloration fonctionnelle (3) uniquement sur la deuxième face principale (12).

2. Procédé selon la revendication 1, dans lequel la première face principale (11) du substrat (1) présente une forme concave ou plane.

3. Procédé selon la revendication 1 ou 2, dans lequel la demi-pièce servant de substrat (1) est fabriquée en polythiouréthane, en polyméthacrylate de méthyle, en polycarbonate, en polyacrylate, en polydiéthylèneglycolbisallylcarbonate ou en leurs combinaisons.

4. Procédé selon l'une quelconque des revendications 1 à 3, dans lequel l'application de la coloration (2) à l'étape (b) est réalisée par immersion du substrat (1) dans une cuve de coloration contenant au moins un colorant non fonctionnel dissous ou dispersé dans un milieu liquide.

5. Procédé selon l'une quelconque des revendications 1 à 4, dans lequel l'application de la coloration fonctionnelle (3) à l'étape (c) est réalisée par enduction centrifuge ou au moyen d'un procédé d'immersion.

6. Procédé selon l'une quelconque des revendications 1 à 5, dans lequel la finition à l'étape (d) est réalisée par au moins une forme de traitement de surface choisie dans le groupe constitué par le fraisage, le meulage et le polissage.

7. Procédé selon l'une quelconque des revendications 1 à 6, dans lequel, à l'étape (d), outre la coloration (2) sur la première face principale (11), une partie du matériau du substrat sous-jacent est également enlevée.

8. Procédé selon l'une quelconque des revendications 1 à 7, comprenant en outre l'étape (e) suivante :
Application d'une ou plusieurs couches de traitement thermique sur au moins l'une des deux faces principales (11, 12) du substrat (1) pourvu d'une coloration (2) et d'une coloration fonctionnelle (3) uniquement sur la deuxième face principale (12).
